# EUROPEAN PATENT APPLICATION

(11) **EP 4 737 281 A1**
(43) Date of publication of application: **06.05.2026**
(21) Application number: 25197646.0
(22) Date of filing: 22.08.2025
(51) Int. Cl.: B62J 35/00, B62K 11/04, B62M 7/04

(54) **FUEL TANK AND METHOD FOR MANUFACTURING LOWER PANEL**

(30) Priority: 29.10.2024 JP 2024189473
(71) Applicant: Suzuki Motor Corporation, Shizuoka 432-8611 (JP)
(72) Inventor: TOKUNAGA, Katsuhiko, Hamamatsu-shi (JP); TANAKA, Hiroshi, Hamamatsu-shi (JP); SATO, Toshihiko, Hamamatsu-shi (JP)
(74) Representative: Haseltine Lake Kempner LLP

(57) **Abstract**

A fuel tank (40) being supported from below by a pair of tank rails (12) of a saddle-type vehicle (1), the fuel tank includes: a lower panel (42) configured to bulge downward so as to be inserted between the pair of tank rails; and an upper panel (41) configured to bulge upward at a position above the pair of tank rails. A flange (44) on an outer edge of the lower panel and a flange (43) on an outer edge of the upper panel are joined together. A step portion (45) is formed on inside of the flange of the lower panel, the step portion being one step lower than the flange, and a dome portion (46) is formed on inside of the step portion so as to deeply protrude downward from the step portion. The step portion is supported by the pair of tank rails, and the dome portion is inserted between the pair of tank rails.

## Description

### TECHNICAL FIELD

The present invention relates to a fuel tank and a method for manufacturing a lower panel.

### BACKGROUND ART

A saddle-type vehicle is known in which a fuel tank is covered with a cover member (see, for example, Patent Literature 1). The fuel tank described in Patent Literature 1 has an upper and lower split structure made up of an upper panel and a lower panel, and a flange of the upper panel and a flange of the lower panel are seam-welded. The cover member is attached to a vehicle body so as to hide a flange-shaped joint between the upper panel and the lower panel. The cover member is formed by combining right and left metal side covers and a resin center cover, and the metal side covers increase rigidity against knee grip.

### CITATION LIST

### PATENT LITERATURE

Patent Literature 1: JP2022-184501A

Incidentally, the fuel tank as described above is supported by a pair of tank rails, and in order to ensure a capacity, it is necessary to insert the lower panel between the pair of tank rails. However, due to restriction in a width direction imposed by the pair of tank rails, it is difficult to form a deep-bottomed lower panel with high accuracy using deep drawing, which has a narrow opening.

### SUMMARY

The present invention is made in consideration of the above-described point, and has an object to provide a fuel tank and a method for manufacturing a lower panel that can accurately form a deep lower panel to ensure a capacity.

A fuel tank according to an aspect of the present invention is a fuel tank being supported from below by a pair of tank rails of a saddle-type vehicle, the fuel tank includes: a lower panel configured to bulge downward so as to be inserted between the pair of tank rails; and an upper panel configured to bulge upward at a position above the pair of tank rails, where a flange on an outer edge of the lower panel and a flange on an outer edge of the upper panel are joined together, a step portion is formed on inside of the flange of the lower panel, the step portion being one step lower than the flange, and a dome portion is formed on inside of the step portion so as to deeply protrude downward from the step portion, and the step portion is supported by the pair of tank rails, and the dome portion is inserted between the pair of tank rails, thereby solving the above-mentioned problem.

According to the fuel tank of the aspect of the present invention, the fuel tank is stably supported on the pair of tank rails by the step portion of the lower panel, and an inner space between the pair of tank rails is effectively utilized by the dome portion of the lower panel. A sufficient capacity of the fuel tank is ensured by the step portion on an upper side of the pair of tank rails and the dome portion inserted between the pair of tank rails. Furthermore, by forming the dome portion and the step portion separately, the dome portion having a deep bottom is formed within a range that is not restricted in a width direction by the pair of tank rails.

### BRIEF DESCRIPTION OF DRAWINGS

FIG. 1 is a left side view of a saddle-type vehicle according to an example.
FIG. 2 is a left side view of a periphery of a fuel tank according to the example.
FIG. 3 is a bottom view of the periphery of the fuel tank according to the example.
FIG. 4 is a side view of a blank material after a first deep drawing in the example.
FIG. 5 is a bottom view of the blank material after the first deep drawing of the example.
FIG. 6 is a side view of a blank material after a second deep drawing of the example.
FIG. 7 is a bottom view of the blank material after the second deep drawing of the example.

### DESCRIPTION OF EMBODIMENTS

A fuel tank according to an aspect of the present invention is supported from below by a pair of tank rails of a saddle-type vehicle. The fuel tank is formed by joining a flange on an outer edge of a lower panel and a flange on an outer edge of an upper panel. The lower panel bulges downward so as to be inserted between the pair of tank rails, and the upper panel bulges upward at a position above the pair of tank rails. A step portion is formed on the inside of the flange of the lower panel, the step portion being one step lower than the flange, and a dome portion is formed on the inside of the step portion so as to deeply protrude downward from the step portion. The step portion allows the fuel tank to be stably supported on the pair of tank rails, and the dome portion is inserted between the pair of tank rails, making effective use of an inner space between the pair of tank rails. A sufficient capacity of the fuel tank is ensured by the step portion on an upper side of the pair of tank rails and the dome portion inserted between the pair of tank rails. Furthermore, by forming the dome portion and the step portion separately, the dome portion having a deep bottom is formed within a range that is not restricted in a width direction by the pair of tank rails.

### Example

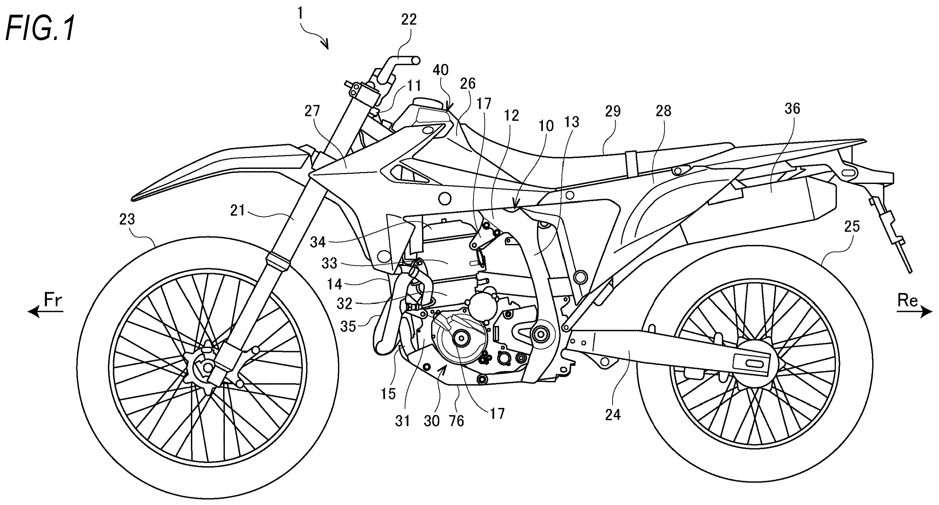

Hereinafter, a saddle-type vehicle according to this example will be described with reference to the accompanying drawings. FIG. 1 is a left side view of the saddle-type vehicle according to the example. In the following drawings, an arrow Fr indicates the front of the vehicle, an arrow Re indicates the rear of the vehicle, an arrow L indicates the left side of the vehicle, and an arrow R indicates the right side of the vehicle. In FIG. 1, a driver is indicated by a two-dot chain line.

As illustrated in FIG. 1, a saddle-type vehicle 1 is configured by mounting an engine 30, an electrical system, and various other components on a vehicle body frame 10. A pair of tank rails 12 extend diagonally downward and rearward from a head pipe 11 of the vehicle body frame 10 on the right and left sides, and a pair of body frames 13 extend downward from rear portions of the pair of tank rails 12. A down frame 14 extends downward from the head pipe 11, and an underloop 15 bent rearward is connected to a lower portion of the down frame 14. A rear end of the underloop 15 is connected to a lower portion of the pair of body frames 13, so that the vehicle body frame 10 is formed into a cradle shape.

A front fork 21 is supported on the head pipe 11 via a steering shaft (not illustrated) so as to be steerable. A handlebar 22 is provided on an upper portion of the front fork 21, and a front wheel 23 is rotatably supported on a lower portion of the front fork 21. A fuel tank 40 is placed on an upper portion of the pair of tank rails 12, and the pair of tank rails 12 and the fuel tank 40 are covered by a tank cover 26 and a pair of front side covers 27. A seat 29 is installed behind the fuel tank 40, and a seat frame (not illustrated) that supports the seat 29 from below is covered from sides by a pair of rear side covers 28.

A swing arm 24 is supported by the body frame 13 so as to be able to swing. The swing arm 24 extends rearward from the body frame 13, and a rear wheel 25 is rotatably supported at a rear end of the swing arm 24. The engine 30 is suspended inside the vehicle body frame 10 via a plurality of suspension brackets 17. A cylinder assembly, which is made up of a cylinder 32, a cylinder head 33, and a cylinder head cover 34 stacked together, is attached to an upper surface of a crankcase 31 of the engine 30. An exhaust pipe 35 extends downward from a front left side of the cylinder head 33, passes through a right side of the cylinder 32, and is connected to a muffler 36 at the rear of the vehicle.

Meanwhile, a typical off-road vehicle employs a semi-cradle type vehicle body frame, and a fuel tank is mounted so as to straddle a single tank rail. A cross section of the fuel tank is horseshoe shaped, with a bottom surface of the fuel tank being narrow. However, since a broad side surface of the fuel tank is used as a knee grip portion, a cover member for covering the fuel tank is not necessary. Carburetor specifications can be easily used with fuel tanks that have a narrow bottom surface, but Fuel Injection (FI) specifications require an in-tank pump at the bottom surface of the fuel tank, making it difficult to use with horseshoe-shaped fuel tanks that have a narrow bottom surface.

FI-spec off-road vehicles often use a double-cradle type vehicle body frame, with an upper and lower split fuel tank mounted on the vehicle body frame. The upper and lower split fuel tank is formed by seam welding flanges of the upper and lower panels. Since the lower panel is inserted between a pair of tank rails, an opening becomes narrow, making it difficult to form the lower panel at a deep depth. In addition, the lower panel is preferably supported by the pair of tank rails. Therefore, in this example, a deep dome portion that is inserted between the pair of tank rails and a shallow step portion that is supported by the pair of tank rails are formed in two steps.

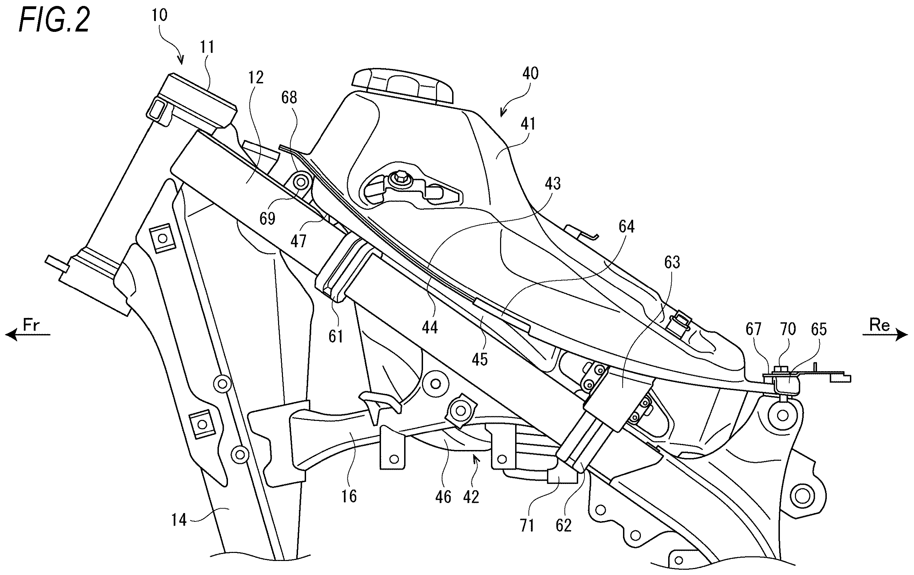

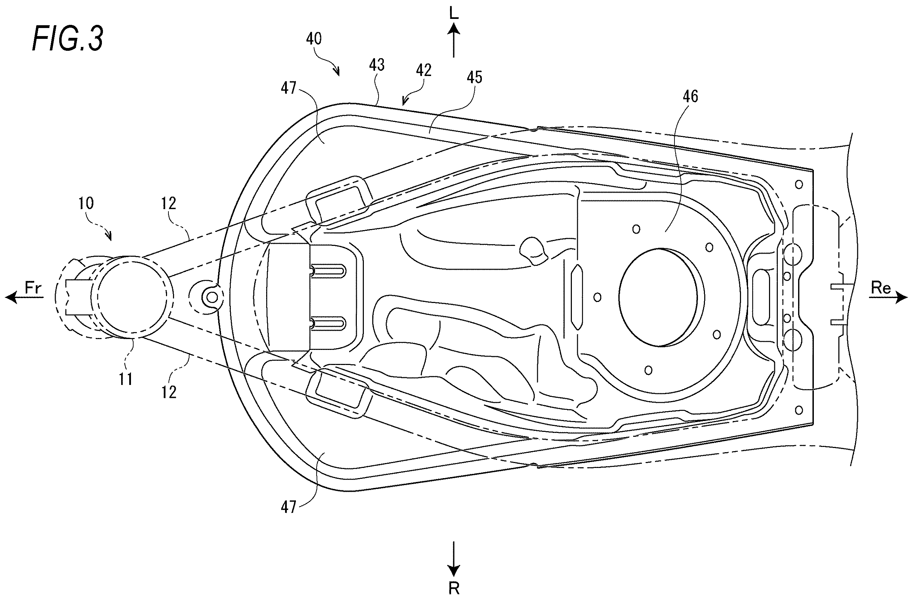

A support structure of the fuel tank will be described with reference to FIGS. 2 and 3. FIG. 2 is a left side view of a periphery of the fuel tank according to this example. FIG. 3 is a bottom view of the periphery of the fuel tank according to this example. In FIG. 3, the vehicle body frame is indicated by a two-dot chain line.

As illustrated in FIGS. 2 and 3, at an upper portion of the vehicle body frame 10, the pair of tank rails 12 extend diagonally downward and rearward from an upper rear side of the head pipe 11, and the single down frame 14 extends downward from a lower rear side of the head pipe 11. An intermediate portions of the pair of tank rails 12 and an intermediate portion of the down frame 14 are connected via a pair of bridges 16 for reinforcement. The fuel tank 40 is supported from below by the pair of tank rails 12, and the fuel tank 40 and the pair of tank rails 12 are covered from above by the tank cover 26 (see FIG. 1), and the fuel tank 40 and the pair of tank rails 12 are covered from both sides by the pair of front side covers 27 (see FIG. 1).

The fuel tank 40 is a two-piece tank in which an upper panel 41 and a lower panel 42 are joined together. The upper panel 41 bulges upward at a position above the pair of tank rails 12, and the lower panel 42 bulges downward so as to be inserted between the pair of tank rails 12. A flange 43 on an outer edge of the upper panel 41 and a flange 44 on an outer edge of the lower panel 42 are seam welded. In a side view, the flange 43 of the upper panel 41 and the flange 44 of the lower panel 42 are curved in a downwardly bulging arc shape, and the flanges 43, 44 are hidden by the tank cover 26 and the pair of front side covers 27.

A step portion 45 is formed on an inner side of the flange 44 of the lower panel 42 in a vehicle width direction, the step portion 45 being one step lower than the flange 44, and a dome portion 46 is formed on the inner side of the step portion 45 in the vehicle width direction, protruding deeply downward from the step portion 45. In this case, the step portion 45 is positioned above an upper surface of the tank rail 12, and the dome portion 46 is positioned below the upper surface of the tank rail 12. The step portion 45 is formed shallow on a front side of the lower panel 42, and is formed deep on a rear side of the lower panel 42. The dome portion 46 is formed deep on the front side of the lower panel 42, and is formed shallow on the rear side of the lower panel 42.

When viewed from below, the step portion 45 is formed on the front side of the lower panel 42 so as to protrude outward in the vehicle width direction beyond the pair of tank rails 12, and on the rear side of the lower panel 42, the step portion 45 is formed along inner edges of the pair of tank rails 12. When viewed from below, the dome portion 46 is formed so as to be entirely contained within an inner side of the pair of tank rails 12 in the vehicle width direction. At the front side of the lower panel 42, the dome portion 46 is formed to be significantly narrower than the step portion 45, and at the rear side of the lower panel 42, the dome portion 46 is formed to be slightly narrower than the step portion 45. In a side view, the dome portion 46 protrudes downward beyond the pair of tank rails 12.

When viewed from the side, a pair of support surfaces 47 that have a flat shape and conform to the upper surfaces of the tank rails 12 are formed in the step portion 45 at the front side of the lower panel 42, and at the rear side of the lower panel 42, the flange 44 is warped rearward so as to move away from the pair of tank rails 12. A pair of front rail cushions 61 are attached to the front sides of the pair of tank rails 12, and a pair of rear rail cushions 62 are attached to the rear sides of the pair of tank rails 12. The pair of support surfaces 47 on the front side of the fuel tank 40 are supported from below by the pair of front rail cushions 61, and the rear half of the flange 44 of the fuel tank 40 is supported from below by the pair of rear rail cushions 62 via a pair of relay members 63.

In this manner, the step portion 45 of the lower panel 42 is supported by the pair of tank rails 12, and the dome portion 46 of the lower panel 42 is inserted between the pair of tank rails 12. The fuel tank 40 is stably supported on the pair of tank rails 12 by the pair of support surfaces 47 of the step portion 45, and a load of the fuel tank 40 is distributed over a wide range of the pair of tank rails 12 from the support surfaces 47 and the flange 44, via the front rail cushion 61, the rear rail cushion 62, and the relay member 63. A capacity of the fuel tank 40 is ensured not only by the dome portion 46 that is inserted between the pair of tank rails 12 but also by the step portion 45 on the upper side of the pair of tank rails 12. In particular, the pair of support surfaces 47 of the step portion 45 are brought closer to the upper surface of the tank rail 12, thereby expanding the capacity.

A pair of front tank cushions 64 and a pair of rear tank cushions 65 are attached to the flanges 43, 44 of the upper panel 41 and the lower panel 42. The pair of front tank cushions 64 are attached to intermediate positions of the flanges 43, 44 in a front-rear direction, and the pair of rear tank cushions 65 are attached to rear end positions of the flanges 43, 44. The pair of front tank cushions 64 and the pair of rear tank cushions 65 are folded back so as to cover side edges of the flanges 43, 44. The front tank cushion 64 faces a front side of an inner surface of the front side cover 27, and the rear tank cushion 65 faces a rear side of the inner surface of the front side cover 27.

In addition, a front tank bracket (not illustrated) is provided at a front end of the fuel tank 40, and a rear tank bracket 67 is provided at a rear end of the fuel tank 40. A front rail bracket 68 is provided on a front side of the pair of tank rails 12, and a rear rail bracket (not illustrated) is provided on a protruding portion protruding upward from the body frame 13. The front tank bracket and the front rail bracket 68 are fastened laterally with a bolt 69, and the rear tank bracket 67 and the rear rail bracket are fastened vertically with a bolt 70. An in-tank pump 71 is provided on a bottom surface of the fuel tank 40 (lower panel 42).

In the above-described fuel tank 40, the upper panel 41 and the lower panel 42 are formed by deep drawing. The flange 44 on the outer edge of the lower panel 42 and the flange 43 on the outer edge of the upper panel 41 are curved in a downwardly bulging arc shape passing through approximately the middle of the fuel tank 40 in a height direction. Since the flanges 43, 44 are curved in a downward arc shape, even when the lower panel 42 bulges downward significantly, it is easy to balance the amount of drawing of the upper panel 41 bulging upward and the amount of drawing of the lower panel 42 bulging downward. The amount of drawing between the upper panel 41 and the lower panel 42 is suppressed, thereby preventing a decrease in processing precision and damage to the materials.

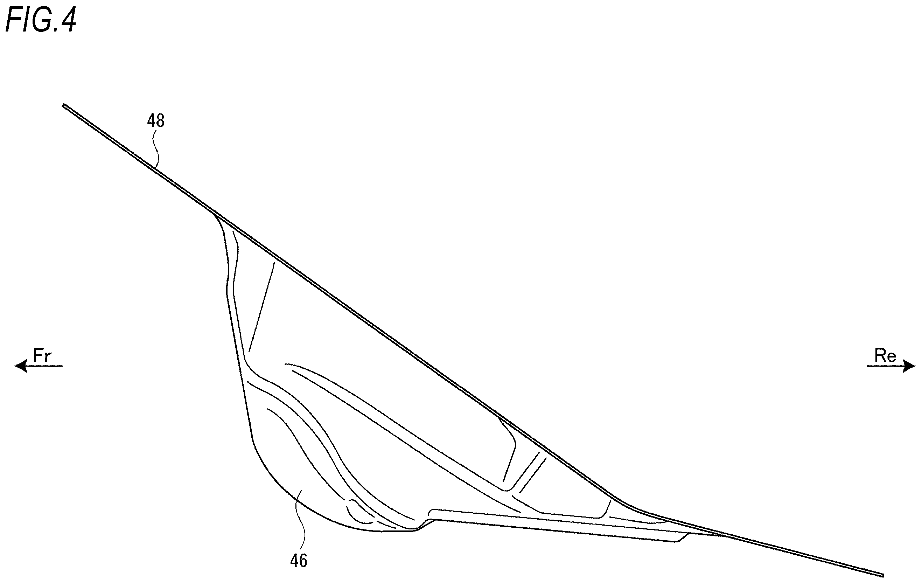

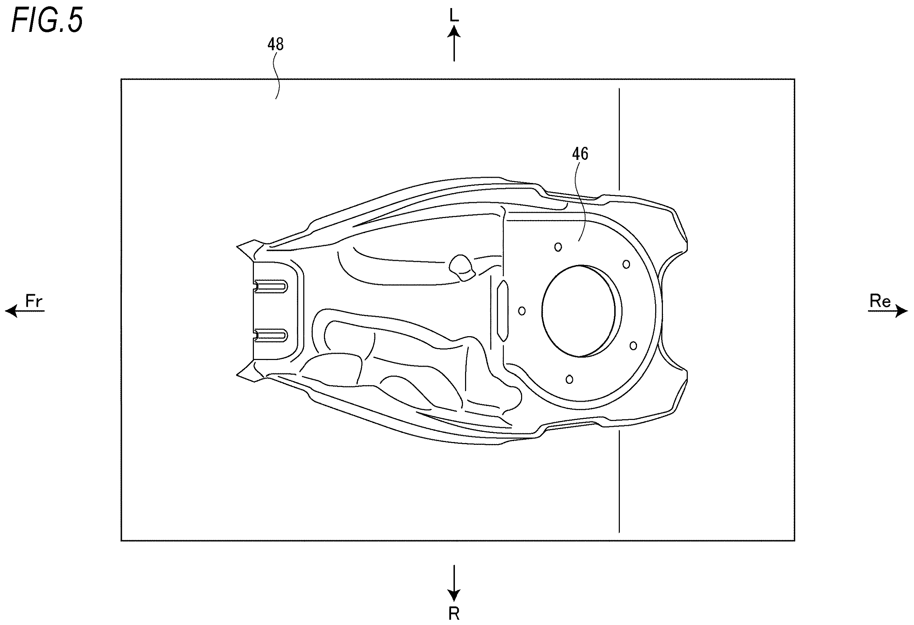

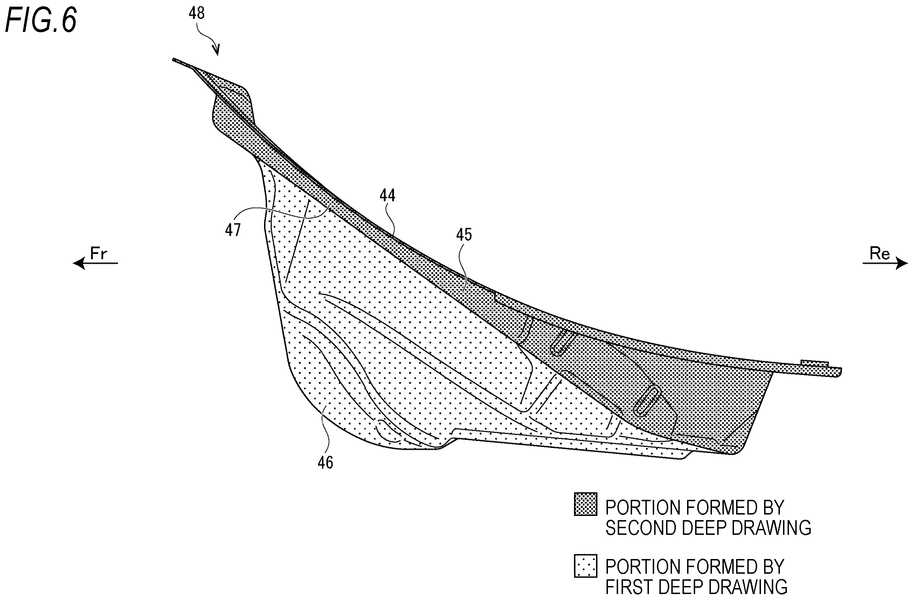

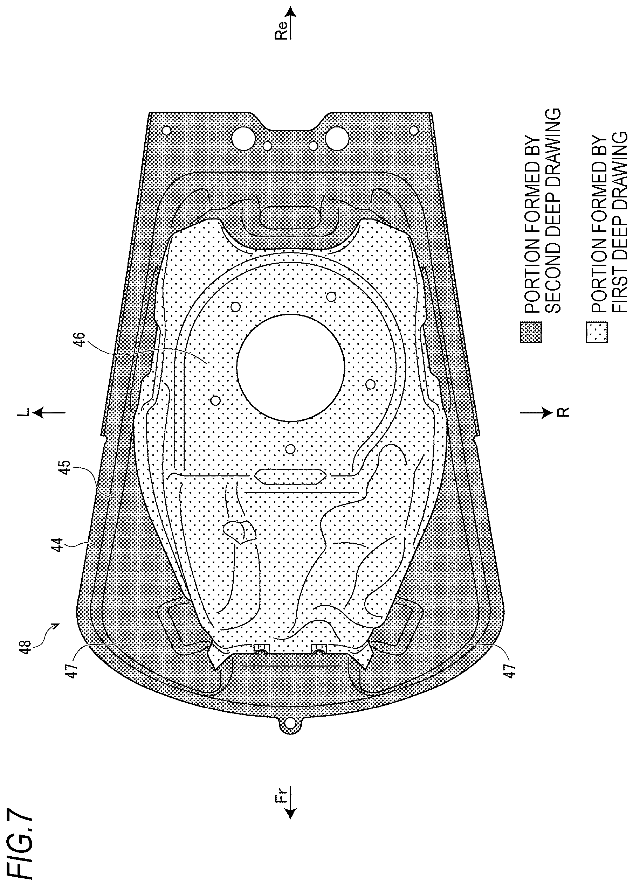

A method for manufacturing the lower panel of the fuel tank will be described with reference to FIGS. 4 to 7. FIG. 4 is a side view of a blank material after a first deep drawing of this example. FIG. 5 is a bottom view of the blank material after the first deep drawing of this example. FIG. 6 is a side view of the blank material after a second deep drawing of this example. FIG. 7 is a bottom view of the blank material after the second deep drawing of this example. In addition, in FIGS. 6 and 7, an area formed by the first deep drawing is indicated by light dots, and an area formed by the second deep drawing is indicated by dark dots.

As illustrated in FIGS. 4 and 5, a first deep drawing is performed on a blank material 48 of sheet metal (step of forming the dome portion 46). In the first deep drawing, a predetermined portion of the blank material 48 that will become the step portion 45 (see FIG. 7) after the lower panel 42 is manufactured is pressed against a die face, and the dome portion 46 having a narrower opening than the step portion 45 is formed in the center of the blank material 48. A width dimension of the dome portion 46 in the vehicle width direction is formed to be large enough to allow the dome portion 46 to be inserted between the pair of tank rails 12 (see FIG. 2). When the dome portion 46 is formed on the blank material 48, the blank material 48 is bent on a rear end side of the dome portion 46.

As illustrated in FIGS. 6 and 7, after the first deep drawing, the second deep drawing is performed on the blank material 48 (step of forming the step portion 45). In the second deep drawing, a predetermined portion of the blank material 48 that will become the flange 44 after the lower panel 42 is manufactured is pressed against the die face, and the step portion 45having a wider opening than the dome portion 46 is formed in the blank material 48. The support surface 47 having a flat shape is formed at the bottom of the step portion 45 and is supported by the pair of tank rails 12 (see FIG. 2). Even when the blank material 48 is bent in the first deep drawing, the step portion 45 is formed with a small amount of drawing in the second deep drawing, so that the bending of the blank material 48 does not hinder the formation of the step portion 45.

At the front side of the lower panel 42, the dome portion 46 is formed deeper than the step portion 45, and at the rear side of the lower panel 42, the dome portion 46 is formed shallower than the step portion 45. When viewed from the side, a boundary between the step portion 45 and the dome portion 46 is formed along the upper surfaces of the pair of tank rails 12, and when viewed from below, the boundary between the step portion 45 and the dome portion 46 is formed along inner edges of the pair of tank rails 12. The dome portion 46 on the inner side of the pair of tank rails 12 and the step portion 45 protruding from the pair of tank rails 12 are formed separately in two steps, the first and second deep drawing, so that molds used in the first and second deep drawing do not become complicated.

As described above, according to the fuel tank 40 of this example, the fuel tank 40 is stably supported on the pair of tank rails 12 by the step portion 45 of the lower panel 42, and an inner space of the pair of tank rails 12 is effectively utilized by the dome portion 46 of the lower panel 42. A sufficient capacity of the fuel tank 40 is ensured by the step portion 45 on the upper side of the pair of tank rails 12 and the dome portion 46 inserted between the pair of tank rails 12. Furthermore, by forming the dome portion 46 and the step portion 45 separately, the dome portion 46 having a deep bottom is formed within a range that is not restricted in the width direction by the pair of tank rails 12.

In this example, the lower panel is formed by two deep drawing operations, but the lower panel may be formed by three or more deep drawing operations.

In addition, in this example, the support surface having a flat shape is formed on the step portion, but the support surface of the step portion does not have to be formed flat, or no support surface may be formed on the step portion.

In addition, in this example, the flange of the lower panel and the flange of the upper panel are curved in an arc shape in a side view, but the shapes of the flange of the lower panel and the flange of the upper panel are not particularly limited. For example, the flange of the lower panel and the flange of the upper panel may be formed in a straight line in a side view.

Furthermore, the fuel tank of this example is not limited to the off-road type saddle-type vehicle described above, and may be used in other types of saddle-type vehicles. A saddle-type vehicle is not limited to all vehicles in which a rider sits astride a seat, but also includes scooter-type vehicles in which a rider does not sit astride a seat.

As described above, a first aspect is a fuel tank (40) that is supported from below by a pair of tank rails (12) of a saddle-type vehicle (1), the fuel tank including a lower panel (42) that bulges downward so as to be inserted between the pair of tank rails, and an upper panel (41) that bulges upward at a position above the pair of tank rails, where a flange (44) on an outer edge of the lower panel and a flange (43) on an outer edge of the upper panel are joined together, a step portion (45) is formed on inside of the flange of the lower panel, the step portion being one step lower than the flange, and a dome portion (46) is formed on inside of the step portion so as to deeply protrude downward from the step portion, and the step portion is supported by the pair of tank rails, and the dome portion is inserted between the pair of tank rails. According to this configuration, the fuel tank is stably supported on the pair of tank rails by the step portion of the lower panel, and an inner space between the pair of tank rails is effectively utilized by the dome portion of the lower panel. A sufficient capacity of the fuel tank is ensured by the step portion on an upper side of the pair of tank rails and the dome portion inserted between the pair of tank rails. Furthermore, by forming the dome portion and the step portion separately, the dome portion having a deep bottom is formed within a range that is not restricted in a width direction by the pair of tank rails.

In a second aspect, in the first aspect, a support surface (47) having a flat shape is formed on the step portion along upper surfaces of the pair of tank rails, and the support surface of the step portion is supported from below by the pair of tank rails. According to this configuration, the fuel tank is stably supported on the pair of tank rails by the support surface having a flat shape. The support surface of the step portion is brought closer to the upper surface of the tank rail, expanding the capacity.

In a third aspect, in the first or second aspect, the flange on the outer edge of the lower panel and the flange on the outer edge of the upper panel are curved in a downwardly bulging arc shape in a side view. According to this configuration, even when the lower panel bulges downward significantly due to the flange curving in a downward arc, it is easy to balance the amount of drawing of the upper panel bulging upward and the amount of drawing of the lower panel bulging downward.

A fourth aspect is a method for manufacturing a lower panel of a fuel tank in which a flange on an outer edge of an upper panel and a flange on an outer edge of a lower panel are joined, the lower panel bulging downward so as to be inserted between a pair of tank rails of a saddle-type vehicle in a state in which the fuel tank is supported by the pair of tank rails, the method including the steps of pressing a predetermined portion of a blank material that becomes a step portion after manufacturing of the lower panel, and forming a dome portion that is inserted between the pair of tank rails by a first deep drawing, and pressing a predetermined portion of the blank material that becomes a flange after manufacturing of the lower panel, and forming the step portion that is supported by the pair of tank rails by a second deep drawing, where the step portion is formed on inside of the flange of the lower panel, the step portion being one step lower than the flange, and the dome portion is formed on inside of the step portion so as to deeply protrude downward from the step portion. According to this configuration, the fuel tank is stably supported on the pair of tank rails by the step portion of the lower panel, and an inner space between the pair of tank rails is effectively utilized by the dome portion of the lower panel. A sufficient capacity of the fuel tank is ensured by the step portion on an upper side of the pair of tank rails and the dome portion inserted between the pair of tank rails. Furthermore, by separately forming the dome portion and the step portion by the first deep drawing and the second deep drawing, the dome portion having a deep bottom is formed within a range that is not restricted in a width direction by the pair of tank rails. Even when the blank material is bent in the first deep drawing, the step portion is formed with a small amount of drawing in the second deep drawing, so that the bending of the blank material does not hinder the formation of the step portion.

Although the present example is described, other examples may be made by combining the above-described example and modification examples in whole or in part.

Furthermore, the technology of the present invention is not limited to the above-described examples, and may be modified, substituted, or changed in various ways without departing from the spirit and scope of the technical concept. Furthermore, when technological advances or derived technologies allow the technical ideas to be realized in a different way, they may be implemented using that method. Therefore, the claims cover all embodiments that may fall within the scope of the technical concept.

### REFERENCE SIGNS LIST

1: saddle-type vehicle
10: vehicle body frame
12: tank rail
40: fuel tank
41: upper panel
42: lower panel
43: flange of upper panel
44: flange of lower panel
45: step portion
46: dome portion
47: support surface
48: blank material

## Claims

1. A fuel tank (40) being supported from below by a pair of tank rails (12) of a saddle-type vehicle (1), the fuel tank comprising:
a lower panel (42) configured to bulge downward so as to be inserted between the pair of tank rails; and
an upper panel (41) configured to bulge upward at a position above the pair of tank rails, wherein
a flange (44) on an outer edge of the lower panel and a flange (43) on an outer edge of the upper panel are joined together,
a step portion (45) is formed on inside of the flange of the lower panel, the step portion being one step lower than the flange, and a dome portion (46) is formed on inside of the step portion so as to deeply protrude downward from the step portion, and
the step portion is supported by the pair of tank rails, and the dome portion is inserted between the pair of tank rails.

2. The fuel tank according to claim 1, wherein
a support surface having a flat shape is formed on the step portion along upper surfaces of the pair of tank rails, and
the support surface of the step portion is supported from below by the pair of tank rails.

3. The fuel tank according to claim 1 or 2, wherein the flange on the outer edge of the lower panel and the flange on the outer edge of the upper panel are curved in a downwardly bulging arc shape in a side view.

4. A method for manufacturing a lower panel (42) of a fuel tank (40) in which a flange (43) on an outer edge of an upper panel and a flange (44) on an outer edge of a lower panel are joined, the lower panel bulging downward so as to be inserted between a pair of tank rails (12) of a saddle-type vehicle (1) in a state in which the fuel tank is supported by the pair of tank rails, the method comprising:
pressing a predetermined portion of a blank material that becomes a step portion (45) after manufacturing of the lower panel, and forming a dome portion (46) that is inserted between the pair of tank rails by a first deep drawing; and
pressing a predetermined portion of the blank material that becomes a flange after manufacturing of the lower panel, and forming the step portion that is supported by the pair of tank rails by a second deep drawing, wherein
the step portion is formed on inside of the flange of the lower panel, the step portion being one step lower than the flange, and the dome portion is formed on inside of the step portion so as to deeply protrude downward from the step portion.
